**Europäisches Patentamt**

**European Patent Office**

**Office européen des brevets**

(19)

(11) Veröffentlichungsnummer : **0 263 810 B2**

# (12) NEUE EUROPÄISCHE PATENTSCHRIFT

(45) Veröffentlichungstag der neuen Patentschrift :
**06.10.93 Patentblatt 93/40**

(21) Anmeldenummer : **87890219.6**

(22) Anmeldetag : **01.10.87**

(51) Int. Cl.⁵ : **C04B 35/10,** C09K 3/14, C01F 7/02

(54) **Gesintertes Schleifmaterial auf Basis von alpha-Aluminiumoxid.**

(30) Priorität : 03.10.86 AT 2630/86

(43) Veröffentlichungstag der Anmeldung :
**13.04.88 Patentblatt 88/15**

(45) Bekanntmachung des Hinweises auf die
Patenterteilung :
**17.04.91 Patentblatt 91/16**

(45) Bekanntmachung des Hinweises auf die
Entscheidung über den Einspruch :
**06.10.93 Patentblatt 93/40**

(84) Benannte Vertragsstaaten :
**DE FR GB IT**

(56) Entgegenhaltungen :
EP-A- 0 090 994
EP-A- 0 152 768
EP-A- 0 168 606
US-A- 2 947 056
US-A- 4 045 412
US-A- 4 314 827

(56) Entgegenhaltungen :
US-A- 4 574 003
CHEMICAL ABSTRACTS, Band 104, Nr. 18, Mai
1986, Seite 332, Nr. 154239n, Columbus, Ohio,
US; K. HAMANO et al.: "Properties and sinterability of high-purity fine alumina powders",
& YOGYO KYOKAISHI 1986, 94(3), 372-9
Journal American Ceramic Society vol. 39.
S.337-344 1956

(73) Patentinhaber : **Treibacher Chemische Werke
Aktiengesellschaft
Postfach 31
A-9330 Treibach (AT)**

(72) Erfinder : **Janz, Peter, Dr.
Feldkircherstrasse 56
A-9020 Klagenfurt (AT)**
Erfinder : **Gottschamel, Georg, Dr.
Kansnitstrasse 10/3
A-9330 Treibach (AT)**

(74) Vertreter : **Kliment, Peter, Dipl.-Ing. Mag.-jur.
Singerstrasse 8
A-1010 Wien (AT)**

**Beschreibung**

Die Erfindung bezieht sich auf ein gesintertes, mikrokristallines Schleifmaterial auf Basis $\alpha$-Al$_2$O$_3$ und auf ein Verfahren zu dessen Herstellung.

Neben den Verfahren zur Herstellung von Korundschleifmaterialien durch Schmelzen von Aluminiumoxid im Lichtbogenofen sind mehrere Verfahren bekannt, die sich mit der Herstellung von Schleifmitteln auf Basis $\alpha$-Al$_2$O$_3$ durch Sintern befassen.

Als Rohstoffe für die Herstellung von gesinterten Schleifmaterialien können sowohl Bauxit und Tonerde als auch feindisperse Aluminiumoxidmonohydrate verwendet werden.

So beschreibt die US-PS 4 314 827 ein mikrokristallines Schleifmaterial auf Basis $\alpha$-Al$_2$O$_3$ das durch Trocknen und Sintern eines Aluminiumoxidhydratgels bei ca. 1400°C hergestellt wird. Danach ist jedoch zur Erreichung einer guten Schleifleistung ein weiterer Zusatz mindestens einer modifizierenden Komponente nötig. Als modifizierende Komponenten werden mindestens 10 % ZrO2 und/oder HfO2 und/oder mindestens 1 % eines Spinells aus Al2O3 mit Oxiden von Co, Ni, Zn oder Mg vorgeschlagen.

Die EP-A-0 152 768 beschreibt ein Schleifmaterial, welches durch Sintern eines Aluminiumoxidhydratgels hergestellt wird, wobei feinste $\alpha$-Aluminiumoxidteilchen als Keimbildner vorhanden sind um die Umwandlungstemperatur des $\gamma$-Al$_2$O$_3$ aus dem Gel in die $\alpha$-Al$_2$O$_3$-Form herabzusetzen. Zusätze von Si, Cr, Mg und Zr in Form ihrer Oxide können als Kristallwachstumshemmer dem Gel zugesetzt werden. Dennoch treten in diesem Material neben den submikronen Kristalliten noch Kristallite bis zu einer Größe von 8$\mu$ auf (abhängig von den Sinterbedingungen). Diese großen Kristallite sind sicherlich auf die im getrockneten Produkt enthaltenen $\alpha$-Al$_2$O$_3$ Partikel (Keimbildner) zurückzuführen, da selbst bei größter Sorgfalt neben den Submikron-Kristalliten auch größere $\alpha$-Al$_2$O$_3$ Partikel vorhanden sind. Aber auch die kleinsten dieser $\alpha$-Al$_2$O$_3$ Partikel sind größer als die erst ab ca. 1000°C aus dem Gel entstehenden $\alpha$-Al$_2$O$_3$ Keime, wodurch ein ungleichmaßiges Kristallitenwachstum begünstigt wird Ziel der Erfindung ist nun ein Schleifmaterial auf Basis $\alpha$-Al$_2$O$_3$, das sich durch große Dichte, hohe Reinheit und hohe Gleichmäßigkeit der mikrokristallinen Struktur auszeichnet. Ein solches Schleifmaterial ist erfindungsgemäß ein gesintertes, mikrokristallines Schleifmaterial, das aus mindestens 99,5 Gew.-% $\alpha$-Al$_2$O$_3$ besteht, eine Dichte von mindestens 97% der theoret. Dichte aufweist und dessen $\alpha$-Al$_2$O$_3$ Kristallitengröße < 2$\mu$ ist. Dieses Schleifmaterial zeichnet sich durch besonders gute Schleifleistungen aus und kann sowohl zu Bändern als auch zu Schleifscheiben verarbeitet werden. Die Erfindung betrifft demnach ein Verfahren zur Herstellung dieses Schleifmaterials, das darin besteht, daß ein hochdisperses $\alpha$-Aluminiumoxidhydrat in eine verdünnte Säurelösung eingerührt wird, die entstandene Suspension zur Entfernung eingeschlossener Luftblasen einer Vakuumentlüftung unterzogen wird, danach die entlüftete Suspension in einem Dispergierapparat desagglomeriert und dabei gegebenenfalls mit Zusätzen versetzt wird, die erhaltene Suspension gegebenenfalls von groben Teilchen befreit, danach getrocknet, zerkleinert und anschließend bei Temperaturen zwischen 1000° und 1500°C gesintert wird.

Überraschenderweise wurde nämlich festgestellt, daß die mikrokristalline Struktur, verbunden mit hoher Dichte und Reinheit des Aluminiumoxids durch geeignete Desagglomerierung des feindispersen $\alpha$-Aluminiumoxidhydrats auch ohne hohen Spinellgehalt oder Vorhandensein von $\alpha$-Al$_2$O$_3$ im getrockneten Produkt erreicht werden kann. Die Umwandlung in $\alpha$-Al$_2$O$_3$beginnt dabei schon unter 1000° C. Damit ist bei einer festgesetzten Sintertemperatur die Differenz zur Umwandlungstemperatur größer. Das führt zur Bildung einer größeren Anzahl von $\alpha$-Al$_2$O$_3$-Keimen, wodurch eine bessere Gleichmäßigkeit der mikrokristallinen Struktur auch bei längeren Sinterzeiten erreicht wird. Als vorteilhaft erwies sich weiters ein geringer Zusatz aus der Gruppe der Elemente Mg, Ca, Co, Ni, Cr, Fe, Si, Ti, Zn, Mn und Zr in Form ihrer Salze, die beim Sintern in Oxide übergeführt werden.Dieser Zusatz erfolgte im Dispergierapparat und lag bei einer Menge von maximal 0,2 Gew.-%, vorzugsweise < 0,1 Gew.-% (berechnet als Oxid im Endprodukt) Diese Zusätze verringern bekannterweise das ungleichmäßige und starke Kristallwachstum beim Sintern.

Die Desagglomerierung der suspendierten Teilchen durchläuft ein Maximum in Abhängigkeit vom Verhältnis Schergeschwindigkeit : Durchfluß. Bei zu niedriger Schergeschwindigkeit reicht die Energie nicht aus, bei zu hoher Schergeschwindigkeit kommt es bereits zu Reagglomeration. Dieses Optimum der Schergeschwindigkeit muß für das Desagglomeriergerät experimentiell ermittelt werden.

Zur Abtrennung größerer noch vorhandener oder gebildeter Agglomerate wird diese Suspension gegebenenfalls einer Zentrifugierung unterworfen.

Überraschenderweise wurde weiters auch festgestellt, daß durch eine Entfernung der eingeschlossenen Luftblasen in der Suspension vor der Desagglomerierung eine weitere Verbesserung des Produktes erzielt werden konnte. Dies ist darauf zurückzuführen, daß feinzerteilte Luftblasen die Porosität des Endproduktes erhöhen und damit die Dichte und Härte negativ beeinflussen. Poren, die größer als 0,4$\mu$m sind, können durch Sintern nicht mehr entfernt werden. Die größeren Poren wachsen nämlich während des Sintervorgangs auf Kosten der kleineren Poren. Diese großen Poren können dann nur mehr durch extrem hohe Sintertemperaturen

2

entfernt werden. Um daher niedrige Sintertemperaturen zu gewährleisten, muß eine Vakuumentlüftung so durchgeführt werden, daß alle Lufteinschlüsse, die bei Trocknung und Sinterung Hohlräume hinterlassen, entfernt werden. Die Aufsteiggeschwindigkeit der Bläschen ist bei kleinen Durchmessern gering, sie steigt mit dem Quadrat des Bläschendurchmessers in der Dispersion an. Beispielsweise dauerte es bei einer Flüssigkeitshöhe von 150 mm bei 0,4 bar mehr als 2 Stunden um eine weitgehend von eingeschlossenen Luftblasen freie, sinterfähige Suspension zu erhalten. Daraus errechnet sich, daß alle Lufteinschlüsse über 7μm Durchmesser entfernt werden müssen. Um dies in möglichst kurzer Zeit durchzuführen ist eine geringe Schichtdicke erforderlich. Die Versuche werden mit der Vakuumentlüftungsanlage Typ VE/FRYMA durchgeführt. Die Suspension, die Lufteinschlüsse enthält, wird dabei durch eine spezielle Vorrichtung in einer Vakuumkammer in dünner Schicht verteilt, sodaß die Lufteinschlüsse expandieren und aufplatzen. Eine Verweilzeit von weniger als 1 Minute reicht bei 0,1 bar in einer Schichtdicke von 1 mm aus um die Lufteinschlüsse zu entfernen.

Als hochdisperse α-Aluminiumoxidhydrate können die im Handel befindlichen Pseudoböhmite, die unter den Namen Pural®, Disperal® und Versal® bekannt sind, verwendet werden. Der Feststoffgehalt der Suspension lag zwischen 5 und 40 Gew.-%, vorzugsweise zwischen 15 und 25 Gew.-%. Als Peptisatorsäure können Salpetersäure, Salzsäure oder Essigsäure Verwendung finden.

Der während des Desagglomerierens in den Dispergierapparat gegebenenfalls durchgeführte Zusatz aus der Gruppe der Elemente Mg, Ca, Co, Ni, Cr, Fe, Ti, Si, Zn, Mn und Zr erfolgt in Form ihrer anorganischen oder organischen Salze, die nach dem Sintern in Form ihrer Oxide vorliegen. Die Zusätze erfolgen in einer Menge von max. 0,2 Gew.-%, vorzugsweise unter 0,1 Gew.-% (bezogen als Oxid im Endprodukt). Am günstigsten erwiesen sich die Salze der entsprechenden vorgelegten Säurelösung.

Die aus dem Dispergierapparat aufgefangene Suspension wird anschließend in geeigneten Trockenvorrichtungen, wie beispielsweise in einem Heißlufttrockenschrank mehrere Stunden lang bei Temperaturen zwischen 80 und 120°C getrocknet.

Das getrocknete Material wird anschließend einer Zerkleinerung unterzogen und danach in einem Ofen bei Temperaturen zwischen 1000° und 1500°C einige Zeit gesintert. Die Sinterzeit ist bei höherer Temperatur geringer als bei tiefer Temperatur und liegt zwischen einigen Minuten und 2 Stunden.

Die nach dem erfindungsgemäßen Verfahren hergestellten Schleifmaterialien wurden dann zu Schleifbändern und Schleifscheiben verarbeitet und in einer vergleichenden Prüfserie gegen Kohlenstoffstahl C 45 wurde die Leistungsfähigkeit dieses Materials ermittelt. Dabei wurde die Abtragsleistung im Vergleich zu Elektroschmelzkorund (=100%) ermittelt. Die erhaltenen Werte sind in der Tabelle angeführt und zeigen deutlich die hervorragenden Schleifleistungen der erfindungsgemäß hergestellten Materialien.

Die Erfindung soll nun an Hand von Beispielen näher erläutert werden.

Beispiel 1

In eine Lösung von 39,5 kg Wasser und 440 g konzentrierte Salpetersäure wurden kontinuierlich 10 kg α-Aluminiumoxidmonohydratpulver der Marke Disperal® eingerührt. Die Suspension wurde dann in der Laborvakuumentlüftungsanlage vom Typ LVE/A/FRYMA bei 100 mbar entlüftet und anschließend durch das schnelllaufende Dispergiergerät mit zwei Zuflußöffnungen gepumpt. Die Durchflußgeschwindigkeit betrug 3 1/h und die Drehzahl des Rotors lag bei ca. 15.000 U/min. Die zweite Zuflußöffnung des Dispergiergerätes blieb verschlossen. Die desagglomerierte Suspension wurde dann in Polyäthylentassen in einer ca. 5cm dicken Schicht aufgefangen und anschließend in einem Heißlufttrockenschrank bei 80°C Lufttemperatur in 36 Stunden zu harten, spröden Platten getrocknet. Die getrockneten Platten wurden in einer Mühle zu durchscheinenden Körnern zerkleinert und in einer Siebmaschine vorklassiert. Das anfallende Unterkorn konnte erneut zur Suspensionsherstellung verwendet werden. Die grünen Körner wurden dann in einem elektrischen Widerstandsofen während 7 Stunden auf 1400°C aufgeheizt und bei dieser Temperatur ca. 2 Stunden gesintert. Die Dichte des gesinterten Materials betrug 98,1 % der theoretischen Dichte, die Kristallitengröße lag unter 2μm.

Beispiel 2

Die Zubereitung und Entlüftung der Dispersion erfolgte wie in Beispiel 1 ausgeführt. Im Dispergiergerät wurde dieser Dispersion jedoch durch die zweite Zuflußöffnung eine Lösung von 6,3 g/l Magnesiumnitrat mit einer Geschwindigkeit von 270 ml/h zugeführt. Die aufgefangene Suspension wurde dann wie in Beispiel 1 weiterbehandelt. Das gesinterte Endprodukt enthielt 0,05 Gew.-% MgO und hatte Dichte von 99,0% der theoret. Dichte. Die Kristallitengröße lag unter 1μm.

Vergleichsbeispiel

Die Herstellung des Materials erfolgte wie im Beispiel 2 ausgeführt mit einer Ausnahme, nämlich daß die Suspension keiner Vakuumentlüftung unterzogen wurde. Nach dem Sintern ergab sich für dieses Material eine Dichte von 75 % der theoret. Dichte.

## Tabelle

## Schleiftestergebnisse

| Material | Abtragsleistung (%) | |
|---|---|---|
| | Fiberscheibe | Band |
| Elektroschmelzkorund | 100 | 100 |
| Zr-Schmelzkorund | 220 | 310 |
| Beispiel 1 | 290 | 360 |
| Beispiel 2 | 330 | 400 |
| Vergleichsbeispiel | 90 | 95 |

## Patentansprüche

1. Verfahren zur Herstellung eines gesinterten, mikrokristallinen Schleifmaterials auf der Basis von $\alpha$-$Al_2O_3$, das aus mindestens 99,5 Gew.-% $\alpha$-$Al_2O_3$ besteht, eine Dichte von mindestens 97% der theoretischen Dichte aufweist und dessen $\alpha$-$Al_2O_3$ Kristallitengröße kleiner 2 $\mu$m ist, wobei ein hoch disperses $\alpha$-Aluminium-Oxidhydrat in eine verdünnte Säurelösung eingerührt wird, die entstandene Suspension in einem Dispergierapparat desagglomeriert und gegebenenfalls mit Zusätzen versetzt wird, die Suspension von groben Teilchen gegebenenfalls noch befreit wird und danach getrocknet und zerkleinert wird, dadurch gekennzeichnet, daß die Suspension zu Beginn zur Entfernung eingeschlossener Luft einer Vakuumentlüftung unterzogen wird und daß das getrocknete Material zuletzt bei Temperaturen zwischen 1000°C und 1500°C gesintert wird.

2. Verfahren nach Anspruch 1, dadurch gekennzeichnet, daß der Feststoffgehalt der Suspension zwischen 5 und 40 Gew.-%, vorzugsweise zwischen 15 und 25 Gew.-% liegt.

3. Verfahren nach einem der Ansprüche 1 oder 2, dadurch gekennzeichnet. daß die verdünnte Säurelösung aus Salpetersäure, Salzsäure oder Essigsäure besteht.

4. Verfahren nach einem der Ansprüche 1 bis 3, dadurch gekennzeichnet, daß die Vakuumentlüftung in dünner Schicht bei einem Druck <0,2 bar durchgeführt wird.

5. Verfahren nach einem der Ansprüche 1 bis 4, dadurch gekennzeichnet. daß die Zusätze aus der Gruppe der Elemente Mg, Ca, Co, Ni, Cr. Fe, Ti, Si, Zn, Mn und Zr gewählt werden.

6. Verfahren nach Anspruch 5, dadurch gekennzeichnet, daß die Zusätze in einer Menge von max. 0,2 Gew.-%, vorzugsweise 0.1 Gew.-% (bezogen als Oxid im Endprodukt) erfolgen.

7. Verfahren nach einem der Ansprüche 1, 5 oder 6, dadurch gekennzeichnet, daß Magnesiumnitrat, Magnesiumchlorid oder Magnesiumacetat verwendet wird.

8. Verfahren nach einem der Ansprüche 1 bis 7, dadurch gekennzeichnet, daß die Abtrennung der groben Teilchen durch Zentrifugieren erfolgt.

**9.** Verfahren nach einem der Ansprüche 1 bis 8, dadurch gekennzeichnet, daß das getrocknete und zerkleinerte Produkt bei Temperaturen zwischen 1000°C und 1500°C, vorzugsweise zwischen 1300°C und 1450°C während 10 Minuten bis 2 Stunden gesintert wird.

**10.** Mikrokristallines Schleifmaterial, hergestellt durch ein Verfahren nach einem der Ansprüche 1 bis 9, das aus mindestens 99,5% $\alpha$-Al$_2$O$_3$ besteht und dessen Kristallitengröße < 2$\mu$m ist, **dadurch gekennzeichnet,** daß die Dichte mindestens 97% der theoretischen Dichte beträgt.

## Claims

**1.** Method of producing a sintered, microcrystalline abrasive material on the basis of $\alpha$-Al$_2$O$_3$ consisting of at least 99.5% of $\alpha$-Al$_2$O$_3$, by weight, said abrasive material having a density of at least 97% of the theoretical density and an $\alpha$-Al$_2$O$_3$ crystallite size of less than 2$\mu$m, whereby a highly dispersed $\alpha$-aluminum oxide hydrate is stirred into a dilute acidic solution, the resultant suspension then being disagglomerated in a dispersing apparatus and, optionally, additives being added thereto, then removing any residual coarse particles from the dispersed suspension, drying and comminuting said material, characterized in that the suspension is subjected to vacuum venting right from the beginning for the purpose of removing any occluded air therefrom, and that the dried material is finally sintered at temperatures of between 1000°C and 1500°C.

**2.** Method according to claim 1, characterized in that the solids content of the suspension is between 5% and 40%, preferably between 15% and 25%, by weight.

**3.** Method according to one of the claims 1 or 2, characterized in that the dilute acidic solution comprises nitric, hydrochloric or acetic acid.

**4.** Method according to one of the claims 1 to 3, characterized in that the vacuum venting is effected at a pressure of less than 0.2 bar on a thin layer of the suspension.

**5.** Method according to one of the claims 1 to 4, characterized in that the additives are selected from the group of elements Mg, Ca, Co, Ni, Cr, Fe, Ti, Si, Zn, Mn, and Zr.

**6.** Method according to claim 5, characterized in that a maximum of 0.2%, by weight, of additives are added, preferably 0.1%, by weight, (based on the oxide in the final product).

**7.** Method according to one of the claims 1, 5 or 6, characterized in that magnesium nitrate, magnesium chloride or magnesium acetate is used.

**8.** Method according to one of the claims 1 to 7, characterized in that the separation of the coarse particles is effected by centrifuging.

**9.** Method according to one of the claims 1 to 8, characterized in that the dried and comminuted product is sintered at a temperature between 1000°C and 1500°C, preferably between 1300°C and 1450°C, for a period of 10 minutes to 2 hours.

**10.** Microcrystalline abrasive material obtained by a method following one of the claims 1 to 9, consisting of at least 99.5% $\alpha$-Al$_2$O$_3$ and having a crystallite size of less than 2$\mu$m, characterized in that the density is at least 97% of the theoretical density.

## Revendications

**1.** Procédé de fabrication d'un produit abrasif microcristallin fritté à base d'$\alpha$-Al$_2$O$_3$, formé d'au moins 99,5% en poids d'$\alpha$-Al$_2$O$_3$, ayant une densité d'au moins 97% de la densité théorique et dont la dimension des cristallites d'$\alpha$-Al$_2$O$_3$ est inférieure à 2 $\mu$m, procédé dans lequel on délaye dans une solution d'acide diluée un hydrate d'oxyde d'aluminium $\alpha$ très dispersé, on désagglomère la suspension formée dans un appareil de dispersion, en lui ajoutant éventuellement des additifs, le cas échéant on en élimine de grosses particules qu'elle peut encore contenir, puis on sèche et on broye le produit obtenu, procédé caractérisé en ce qu'au début on soumet la suspension à une désaération sous vide pour en éliminer l'air inclus, et finalement on fritte le produit séché à des températures de 1000 à 1500°C.

2. Procédé suivant la revendication 1, caractérisé en ce que la teneur en matière solide de la suspension est de 5 à 40% en poids, de préférence de 15 à 25%.

3. Procédé selon la revendication 1 ou 2, caractérisé en ce que la solution d'acide diluée est une solution d'acide nitrique, chlorhydrique ou acétique.

4. Procédé selon l'une des revendications 1 à 3, caractérisé en ce que l'on effectue la désaération sous vide sur une couche mince à une pression inférieure à 0,2 bar.

5. Procédé selon l'une des revendications 1 à 4, caractérisé en ce que les additifs sont pris parmi les éléments Mg, Ca, Co, Ni, Cr, Fe, Ti, Si, Zn, Mn et Zr.

6. Procédé selon la revendication 5, caractérisé en ce que les additifs sont ajoutés dans une proportion d'au maximum 0,2% en poids, de préférence de 0,1%, en oxydes dont le produit final.

7. Procédé selon la revendication 1, 5 ou 6, caractérisé en ce que l'on ajoute du nitrate, du chlorure ou de l'acétate de magnésium.

8. Procédé selon l'une des revendications 1 à 7, caractérisé en ce que la séparation des grosses particules se fait par centrifugation.

9. Procédé selon l'une des revendications 1 à 8, caractérisé en ce que le produit séché et broyé est fritté pendant une durée de 10 minutes à 2 heures à des températures de 1000 à 1500°C, de préférence de 1300 à 1450°C.

10. Produit abrasif microcristallin que l'on obtient par un procédé selon l'une des revendications 1 à 9, formé d'au moins 99,5% d'$\alpha$-$Al_2O_3$ et dont la dimension des cristallites est inférieure à 2 $\mu$m, produit caractérisé en ce que sa densité est d'au moins 97% de la densité théorique.